# EUROPEAN PATENT APPLICATION

(11) **EP 4 761 177 A1**
(43) Date of publication of application: **17.06.2026**
(21) Application number: 24383377.9
(22) Date of filing: 16.12.2024
(51) Int. Cl.: H04L 9/40, H04L 9/08, H04L 12/46

(54) **METHOD AND SYSTEM TO INCREASE SECURITY IN VPN SERVICES**

(71) Applicant: Telefónica Innovación Digital, S.L., 28050 Madrid (ES)
(72) Inventor: Yang, Xiaoyuan, 28050 Madrid (ES)
(74) Representative: Carlos Hernando, Borja

(57) **Abstract**

A method and system to increase security in VPN services are provided. The method comprises receiving, at a VPN terminator, a message sent by a first computer device at a first site intended for a second computer device at a second site; encrypting the received message, at the VPN terminator, using a first shared session key, the first shared session key being updated using a first renegotiated session key; and routing, by the VPN terminator, the encrypted message to the second computer device. The method further comprises periodically combining the first renegotiated session key with a first LLB shared secret to generate a first hash function, which is used to create the first shared session key. The first LLB shared secret is computed by hashing a value of at least one selected random seed with another LLB shared secret.

## Description

### TECHNICAL FIELD

The present invention generally relates to VPN services. More specifically, the invention relates to a method and system to increase security in VPN services, particularly against cyber-attacks, such as "store now and decrypt later" (SNDL) attacks, among others.

### BACKGROUND OF THE INVENTION

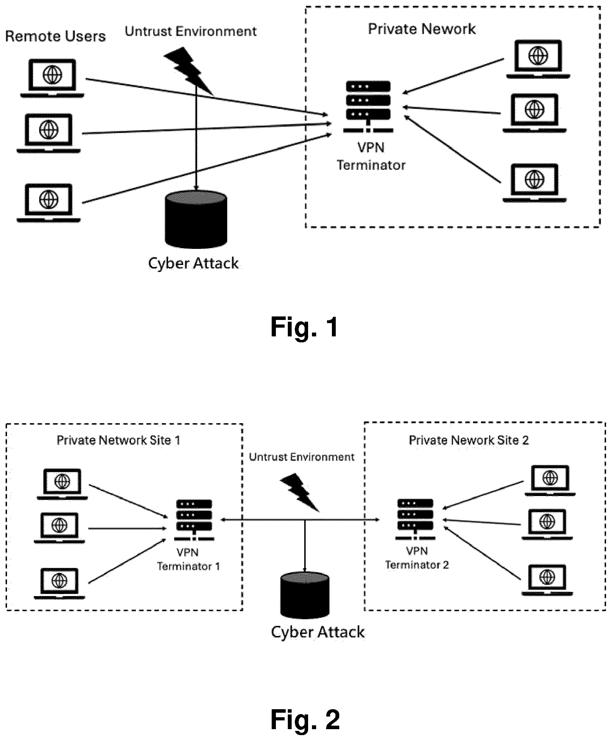

VPNs services can be divided by remote Access VPN and site-to-site VPN (or Router-to-Router VPN). The first type of VPN, as illustrated in Fig. 1, connects an individual end user's device (e.g., laptop, smartphone, or tablet) securely to a private network, often a corporate or organizational network. It is typically used to allow remote employees to access internal resources such as files, applications, or email servers securely over the internet. The second type of VPN, as illustrated in Fig. 2, connects two private networks (e.g., two different office locations of a company) over the Internet securely. It allows seamless communication between devices on the two networks as if they were part of the same physical network.

On the other hand, the rapid development of quantum computing has introduced both groundbreaking opportunities and significant threats to existing cybersecurity infrastructures. One of the most critical concerns comes from Shor's algorithm, which enables quantum computers to efficiently factorize large numbers in two prime numbers. This poses a direct threat to classical cryptographic systems like RSA and ECC, which rely on the computational difficulty of prime factorization as their foundation.

Quantum computers pose a significant threat to the security of traditional VPN services like OpenVPN and IPsec because these protocols rely heavily on cryptographic algorithms for authentication and key exchange. Many VPNs use RSA (Rivest-Shamir-Adleman) or ECDSA (Elliptic Curve Digital Signature Algorithm) for key exchange and authentication. Quantum computers, with Shor's algorithm, can factorize large integers and solve discrete logarithms exponentially faster than classical computers. This makes RSA, DSA, and ECDSA insecure against sufficiently powerful quantum computers. Chinese patents CN118540165B and CN118540163B solve this problem by integrating quantum keys in the VPN services.

Quantum computers can also use Grover's algorithm to search for keys in a symmetric cipher like AES at a square root speed-up. For example, AES-128 would have its effective strength reduced to AES-64, which is not secure by modern standards. However, by increasing the number of bits can effectively mitigate this can of attacks. For instance, AES-256 provides better resistance, as its effective strength would be reduced to 128 bits, still considered secure.

Two of the most popular VPN services are OpenVPN and IPsec. OpenVPN typically uses RSA or ECDSA for key exchange in its default configurations, making it vulnerable to quantum attacks. OpenVPN also uses symmetric encryption (e.g., AES), which would be less vulnerable but would require larger key sizes for future-proofing. IPsec, in other side, commonly uses IKE (Internet Key Exchange) with RSA, ECDSA, or Diffie-Hellman for establishing secure sessions. Diffie-Hellman key exchange, like RSA, is vulnerable to quantum attacks because Shor's algorithm can solve its discrete logarithm problem efficiently.

To address these concerns, post-quantum cryptography (PQC) algorithms are being developed to replace traditional algorithms. VPN services need to adapt by integrating these newer cryptographic standards:
- Lattice-Based Cryptography: Algorithms like Kyber and Dilithium (part of NIST's post-quantum cryptography standardization process) are resistant to quantum attacks.
- Hash-Based Signatures: Algorithms like SPHINCS+ offer quantum resistance but are slower and less efficient for some applications.
- Hybrid Cryptography: Combining traditional and post-quantum algorithms ensures compatibility during the transition.

The current post-quantum algorithms (like Kyber, Dilithium, and SPHINCS+) have undergone rigorous testing, but they lack the decades of scrutiny and real-world exposure that classical algorithms like RSA or AES have endured. The novelty of these algorithms introduces its own set of challenges. Issues in their hardware or software implementation, theoretical vulnerabilities, or unforeseen flaws in their design, such as undiscovered weaknesses in the mathematical structure of the algorithm, could compromise their effectiveness. In US20240106636A1, authors propose to use up to 4 encapsulations to reduce the risk of new post quantum algorithms.

The novelty of post-quantum algorithms creates a challenge issue for SNDL attacks, where adversaries intercept and store encrypted data with the expectation that future quantum computers will break its encryption. Even if PQC algorithms are implemented today, potential flaws or errors might render the data vulnerable in the future. As such, the transition to post-quantum security must be undertaken with urgency, rigorous testing, and a focus on robust implementation to mitigate these risks.

To minimize the risk of SNDL attacks, multi-layered approach has been taken. For instance, hybrid cryptographic systems use a combination of classical and post-quantum cryptographic algorithms for key exchanges and signatures. Other methods use ephemeral key exchanges to minimize the long-term value of compromised keys. From point of the data management, data-owners may reduce the retention periods of sensitive data so reduce the lifespan of any intercepted ciphertext.

The SNDL attack is always associated with a cost. In VPN services, it requires identifying and storing the target data for an extended period. Both encrypted data and key exchange packets need to be intercepted and stored. The loss of any key exchange packet can make it impossible to recover the cipher-key, as well as the encrypted data.

New and improved solutions to increase security in VPN services are therefore needed.

### DESCRIPTION OF THE INVENTION

To that end, the object of present invention is the provision of a new solution to increase the difficulty and cost of cyber-attacks (e.g. SNDL attacks) on VPN services by increasing the total amount of information that needs to be stored to successfully decrypt the data using (quantum) computers.

This object is fulfilled by a method with the characteristics of claim 1 and by a system with the features of claim 13.

According to one aspect, the present invention provides, a method to increase security in VPN services. The method, as known in the field, comprises receiving, at a VPN terminator, a message sent by a first computer device at a first site intended for a second computer device at a second site; encrypting the received message, at the VPN terminator, using a first shared session key, the first shared session key being updated using a first renegotiated session key; and routing, by the VPN terminator, the encrypted message to the second computer device.

Unlike the know solutions, the method further comprises periodically combining the first renegotiated session key with a first Long Lasting Backward (LLB) shared secret to generate a first hash function, which is used to create the first shared session key. Moreover, the first LLB shared secret is computed by hashing a value of at least one selected random seed with another/previous LLB shared secret, where the random seed comprises a string of information, exchanged by the VPN terminator or by a VPN user application, depending on whether the VPN service is a remote access VPN or a site-to-site VPN.

The proposed solution is not limited to a specific VPN solution and is applicable to any type of VPN service.

In some embodiments, the first LLB shared secret comprises a timestamp indicating its validity time.

In some embodiments, the first hash function comprises a hash cryptographic function including SHA-224, SHA-256, SHA-384, or SHA-512.

In some embodiments, for remote access VPN services, the random seed, before being selected, is stored in a seed database of the VPN terminator. In this case, the VPN terminator receives the message from the first computer device through the Internet. Additionally, the seed database is periodically updated with new random seeds. For instance, the VPN application running on a user's computer can periodically contact the VPN server to propose new seeds. Alternatively, the VPN server may periodically send new seeds to the VPN application.

For site-to-site VPN services, the first VPN terminator is a first VPN terminator operating on a first private network and is the entity/element that routes the encrypted message to the second computer device through a second VPN terminator operating on a second private network. In this case, the first and second VPN terminators are connected through the Internet using respective public network interfaces. In addition, the second VPN terminator is the entity/element responsible for decrypting the encrypted message using a second shared session key, which is generated using a second hash function by combining a second renegotiated session key with a second LLB shared secret. This second LLB shared secret is computed using the value of the at least one selected random seed, the latter being agreed upon by both the first and second VPN terminators.

In some embodiments, the random seed), before being selected, is stored in a seed database of both first and second VPN terminators. This seed database is periodically updated with new random seeds exchanged between the first VPN terminator and the second VPN terminator over a long period of time, with either VPN terminator proposing the seeds to the other.

In some embodiments, the seed database has a fixed size.

In some embodiments, the method also comprises establishing a capacity threshold for the seed database, and removing the oldest random seeds from the seed database when the capacity threshold is achieved.

In some embodiments, the first and second renegotiated session keys are periodically renegotiated by the first and second VPN terminators using an asymmetric encryption technique.

Present invention also provides, according to another aspect, a system to increase security in VPN services. The system comprises a first computer device at a first site, a second computer device at a second site, and a VPN terminator. The VPN is configured to receive a message sent by the first computer device; encrypt the received message using a first shared session key that is created by a first hast function; and route the encrypted message to the second computer device. In the proposed system, the first hash function is generated by periodically combining a first renegotiated session key with a first LLB shared secret, the latter, which comprises a string of information of a given length, is computed by hashing a value of at least one selected random seed with another/previous LLB shared secret.

In some embodiments, the VPN service comprises a remote access VPN. In this case, the VPN terminator is configured to receive the message from the first computer device through the Internet. The system further comprises a seed database configured to store random seeds. Additionally, the system can also include an application running on a user's computer/device and a VPN server.

In some embodiments, the VPN service comprises a site-to-site VPN. In this case, the first VPN terminator is a first VPN terminator configured to operate on a first private network and the system further comprises a second VPN terminator to operate on a second private network, the second computer device being operatively connected to the second VPN terminator. The first and second VPN terminators are operatively connected through the Internet using corresponding public network interfaces. The second VPN terminator is configured to decrypt the encrypted message using a second shared session key, the latter being generated using a second hash function, which is the combination of a second renegotiated session key with a second LLB shared secret. In addition, the second LLB shared secret is computed using the value of the at least one selected random seed, the latter being agreed upon by both the first and second VPN terminators.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the present invention introduces a LLB shared secret to mitigate cyber-attacks (e.g. SNDL attacks) in VPN services. An attacker would need to intercept all traffic to accurately compute the shared secret for a cyber-attack. Due to the lengthy interception period required, the success rate of such attack is significantly reduced.

In some embodiments, the design involves VPN terminators periodically proposing a new random seed, which is stored in the seed database on both terminators. At regular/periodical intervals, both terminators agree on the same selected random seed from the seed database to generate the new LLB shared secret that is going to be used for generating the shared session key. The backward dependency of the LLB shared secret on randomly selected exchanged information between the two VPN terminators, in the form of seeds, enhances its security. This approach makes it extremely challenging for an attacker to intercept the LLB shared secret, as they would need to capture all the seeds exchanged over prolonged periods. Consequently, this design significantly complicates cyber-attacks for most hackers.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically illustrates an example of a remote access VPN.
Fig. 2 schematically illustrates an example of a site-to-site VPN.
Fig. 3 illustrates the architecture of the proposed invention, according to an embodiment.
Fig. 4 graphically illustrates an embodiment of the LLB shared secret deviation component.

### DETAILED DESCRIPTION OF THE INVENTION AND OF PREFERRED EMBODIMENTS

The present invention generates a shared secret to mitigate cyber-attacks; thus increasing security in VPN services. This shared secret - termed in the following Long Lasting Backward (LLB) shared secret- can assist in the key renegotiation process during a VPN session. The implementation of the shared secret can rely on information exchanged over extended periods between two VPN terminators for the case of site-to-site VPN services or by a VPN terminator or a VPN user application for the case of a remote access VPN.

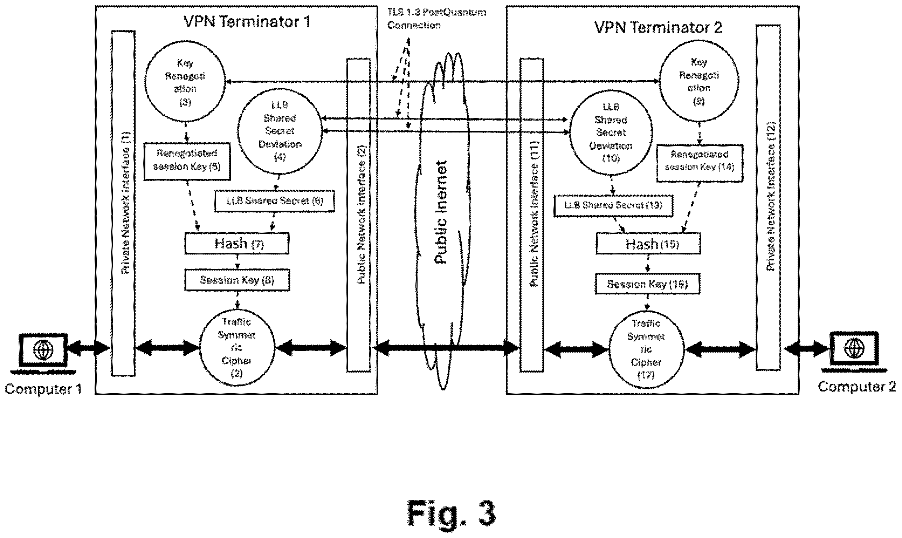

Fig. 3 illustrates an embodiment of the invention tailored for site-to-site VPN services. In this configuration, the approach facilitates secure communication between two distinct sites, each equipped with a VPN terminator. These terminators handle encryption, decryption, and secure routing of messages between the sites.

It is important to note that the same methodology is applicable to remote access VPNs. In this scenario, the configuration involves a single VPN terminator at a private network, which communicates directly with a VPN user application running on the computer device of a remote user. The core principles of the invention remain consistent, with the primary difference being the interaction between the single terminator and the remote user device instead of between two terminators.

Referring back to Fig. 3, the two VPN terminators operate within two private networks. Both VPN terminators have identical designs, featuring a private network interface 1, 11 and a public network interface 2, 12. Computers within the private network can connect directly to the corresponding VPN terminator.

The network is configured to allow any pair of computers at different sites to communicate via the VPN terminators and public Internet. For example, when the first computer device sends a message to the second computer device, the message first goes to the first VPN terminator through the private network interface 1. The traffic symmetric cipher 2 of the first VPN terminator encrypts the message, which is then sent to the public Internet via the public network interface 2. The encrypted message arrives at the public network interface 11 of the second VPN terminator, where it is decrypted by the traffic symmetric cipher 17 thereof, and routed to the second computer device via the private network interface 12.

The traffic symmetric cipher 2 of the first VPN terminator uses a (first) shared session key 8 that is constantly updated by a (first) key renegotiation mechanism 3, a (first) LLB shared secret deviation mechanism 4, and a (first) hash function 7, for example, a SHA-224, SHA-256, SHA-384, or SHA-512, among others. Note that key renegotiation mechanism 3 and LLB shared secret deviation mechanism 4 are independent elements and implement different processes.

The key renegotiation mechanism 3 periodically agrees a shared key called (first) renegotiated session key 5. This periodic key renegotiation provides enhanced security by limiting the lifespan of any single key, thus minimizing the potential impact of key compromise.

Particularly, the communication between the two VPN terminators for the key renegotiation uses asymmetric encryption such as RSA or ECDSA that can suffer cyber-attacks. If an attacker can intercept the traffic related with key renegotiation, he/she can discover renegotiated session key using a future quantum computer.

As explained before, to mitigate such cyber-attacks, particularly SNDL attacks, the present invention complements the renegotiated session key 5 with the above-mentioned shared secret (i.e. the (first) LLB shared secret 6). Specifically, this LLB shared secret 6 is combined with the renegotiated session key 5 using the hash function 7 to create the shared session key 8. Note that the second VPN terminator has the same design as the first VPN terminator; therefore, the same explanations equally apply to the second VPN terminator and their corresponding elements/components.

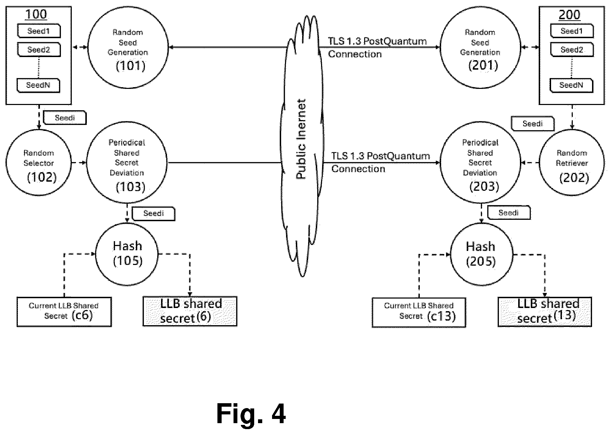

With reference to Fig. 4, this figure shows an embodiment of the architecture of the LLB shared secret deviation mechanisms 4, 10 for generating the LLB share secrets 6, 13. Although the design is same in both VPN terminators, in the following it is assumed that the left site of the figure acts as the initiator of the process.

In particular, in this embodiment, the process involves the following steps. First, the random seed generation mechanism 101 of the first VPN terminator periodically connects with the random seed generation mechanism 201 of the second VPN terminator to propose a new random seed. The random seed is just a random string of information of a certain size. For instance, 64 bytes, among others.

The proposed seed is then stored in the seeds databases 100, 200.

Subsequently, the periodical shared secret deviation mechanism 103 is activated at repeated or frequent intervals to select a random seed, such as seedᵢ, from the seed database 100. Upon selection, the deviation mechanism 103 communicates with the corresponding periodical shared secret deviation component 107 to initiate the creation of a new LLB shared secret 6 using seedᵢ. For this purpose, it transmits the index of *seedᵢ.* In response, the periodical shared secret deviation 107 retrieves seedᵢ from its own seed database 200 by using the random retriever 202.

When both periodical shared secret deviations 103, 203 has agreed upon the seed that is going to be used to generate the new secret, the LLB shared secrets 6, 13 are generated by hashing 105, 205 the string composed by a current LLB shared secret c6, c13 and the value of the seedᵢ.

Particularly, in preferred embodiments, the present invention employs TLS 1.3 Post-Quantum Communication protocols for all control channels, including key renegotiation 3, 9, random seed generation mechanisms 101, 201, and periodic shared secret derivation 103, 203. This cutting-edge standard supports hybrid cryptographic solutions, seamlessly integrating post-quantum algorithms with classical cryptographic methods. By doing so, robust security against both classical and quantum adversaries is ensured, providing a future-proof approach to secure communication.

In some embodiments, each LLB shared secret 6, 13 has a timestamp indicating its validity period; thus it is ensured that both VPN terminators use the same secret.

In addition, the seed databases 100, 200 can have a fix size. If this is the case, when they reach their capacity, a threshold mechanism can be employed to maintain its operational efficiency. This mechanism can involve setting a constant capacity threshold to govern the database's size. When the number of stored seeds exceeds this threshold, the oldest seeds can be removed. This approach ensures the database retains only a recent and relevant window of seeds.

Moreover, in some embodiments, if the seed databases 100, 200 are empty, the invention can further implement a bootstrap process that fills them quickly with the same seeds.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method to increase security in virtual private network, VPN, services, the method comprising:
receiving, at a VPN terminator, a message sent by a first computer device at a first site intended for a second computer device at a second site;
encrypting the received message, at the VPN terminator, using a first shared session key (8), the first shared session key (8) being updated using a first renegotiated session key (5); and
routing, by the VPN terminator, the encrypted message to the second computer device, wherein:
the method further comprises periodically combining the first renegotiated session key (5) with a first Long Lasting Backward, LLB, shared secret (6) to generate a first hash function (7), which is used to create the first shared session key (8); and
the first LLB shared secret (6) is computed by hashing a value of the at least one selected random seed (seedᵢ) with another LLB shared secret (c6), the random seed (seedᵢ) comprising a string of information.

2. The method of claim 1, wherein the VPN service comprises a remote access VPN.

3. The method of claim 1, wherein the VPN service comprises a site-to-site VPN.

4. The method of any one of the previous claims, wherein the first LLB shared secret (6) comprises a timestamp indicating its validity time.

5. The method of any one of the previous claims, wherein the first hash function (7) comprises a hash cryptographic function including SHA-224, SHA-256, SHA-384, or SHA-512.

6. The method of claim 2, wherein the random seed (seedᵢ), before being selected, is stored in a seed database of the VPN terminator, and wherein the VPN terminator receives the message from the first computer device through the Internet.

7. The method of claim 3, wherein:
the first VPN terminator, which is a first VPN terminator operating at a first private network, routes the encrypted message to the second computer device through a second VPN terminator operating at a second private network;
the first and second VPN terminators are connected through the Internet using corresponding public network interfaces (2, 11);
the second VPN terminator comprises decrypting the encrypted message using a second shared session key (16), the latter being generated using a second hash function (15), which is the combination of a second renegotiated session key (14) with a second LLB shared secret (13);
the second LLB shared secret (13) is computed using the value of the at least one selected random seed (seedᵢ), the latter being agreed by both first and second VPN terminators.

8. The method of claim 7, wherein the random seed (seedᵢ), before being selected, is stored in a seed database (100, 200) of both first and second VPN terminators.

9. The method of claim 8, wherein the seed database (100, 200) is periodically updated with new random seeds exchanged between the first VPN terminator and the second VPN terminator, with either VPN terminator proposing the seeds to the other.

10. The method of claim 6 or 9, wherein the seed database has a fixed size.

11. The method of claim 10, further comprising:
establishing a capacity threshold for the seed database (100, 200); and
removing the oldest random seeds from the seed database (100, 200) when the capacity threshold is achieved.

12. The method any one of the previous claims 7-11, wherein the first and second renegotiated session keys (5, 14) are periodically renegotiated by the first and second VPN terminators using an asymmetric encryption technique.

13. A system to increase security in virtual private network, VPN, services, the system comprising:
a first computer device at a first site;
a second computer device at a second site;
a VPN terminator, configured to:
receive a message sent by the first computer device;
encrypt the received message using a first shared session key (8), the first shared session key (8) being created by a first hast function (7), which is generated by periodically combining a first renegotiated session key (5) with a first Long Lasting Backward, LLB, shared secret (6), the first LLB shared secret (6) being computed by hashing a value of at least one selected random seed (seedᵢ) with another LLB shared secret (c6), the random seed (seedᵢ) comprising a string of information; and
route the encrypted message to the second computer device.

14. The system of claim 13, wherein:
the VPN service comprises a remote access VPN,
the VPN terminator receives the message from the first computer device through the Internet; and
the system further comprises a seed database configured to store random seeds.

15. The system of claim 13, wherein:
the VPN service comprises a site-to-site VPN;
the first VPN terminator is a first VPN terminator configured to operate at a first private network;
the system further comprises a second VPN terminator configured to operate at a second private network, the second computer device being operatively connected to the second VPN terminator;
the first and second VPN terminators are operatively connected through the Internet using corresponding public network interfaces (2, 11);
the second VPN terminator is configured to decrypt the encrypted message using a second shared session key (16), the latter being generated using a second hash function (15), which is the combination of a second renegotiated session key (14) with a second LLB shared secret (13);
the second LLB shared secret (13) is computed using the value of the at least one selected random seed (seedᵢ), the latter being agreed by both first and second VPN terminators.
